# EUROPÄISCHE PATENTSCHRIFT

(11) **EP 4 128 479 B1**
(45) Veröffentlichungstag und Bekanntmachung des Hinweises auf die Patenterteilung: **14.02.2024**
(21) Anmeldenummer: 21725404.4
(22) Anmeldetag: 23.04.2021
(51) Int. Cl.: H02K 1/02, H01F 1/14

(54) **ELEKTRISCHER MOTOR**
ELECTRIC MOTOR
MOTEUR ÉLECTRIQUE

(30) Priorität: 05.06.2020 DE 102020207060; 19.06.2020 DE 102020207625
(43) Veröffentlichungstag der Anmeldung: 08.02.2023
(73) Patentinhaber: Siemens Aktiengesellschaft, 80333 München (DE)
(72) Erfinder: KRISPIN, Michael, 85591 Vaterstetten (DE); LAMPENSCHERF, Stefan, 85586 Poing (DE); RIEGER, Gotthard, 80636 München (DE)
(74) Vertreter: Siemens Patent Attorneys
(86) Internationale Anmeldenummer: PCT/EP2021/060730
(87) Internationale Veröffentlichungsnummer: WO 2021/244803

(56) Entgegenhaltungen:
- EP-A1- 2 127 784
- DE-A1-102007 060 945
- JP-A- 2004 359 990
- JP-A- 2007 131 886
- US-A1- 2015 089 987
- YU R H ET AL: "High Temperature Soft Magnetic Materials: FeCo Alloys and Composites", IEEE TRANSACTIONS ON MAGNETICS, IEEE SERVICE CENTER, NEW YORK, NY, US, Bd. 36, Nr. 5, 1. September 2000 (2000-09-01), XP011033289, ISSN: 0018-9464

## Beschreibung

Die Erfindung betrifft einen elektrischen Motor nach dem Patentanspruch 1. Elektrische Motoren weisen in der Regel einen Stator und eine bewegte Komponente auf. Die bewegte Komponente ist bei einer rotierenden Maschine ein Rotor bzw. bei einem linearen Motor ein Schlitten. Sowohl der Stator als auch die bewegte Komponente, im Weiteren Rotor genannt, umfassen dabei elektrische Wicklungen, die in der Regel um weichmagnetische Kerne gewickelt sind. Bei der Herstellung von weichmagnetischen Kernen werden in der Regel nach dem Stand der Technik sogenannte Blechpakete verwendet. Hierbei werden weichmagnetische Bleche entsprechend gestanzt bzw. mit Lasertrennverfahren eine bestimmte Struktur ausgeschnitten und eine Vielzahl dieser Bleche zu einem dreidimensionalen Körper zusammengesetzt.

DE 10 2007 060945 A1 beschreibt einen Rotoranker für eine elektrische Maschine, wobei der Rotoranker zumindest abschnittsweise aus einer Matrix mit darin eingebetteten ferromagnetischen Partikeln ausgebildet ist.

Magnetische Werkstoffe werden allerdings für viele Anwendungen auch außerhalb des Bereichs von elektrischen Maschinen als Pulververbundwerkstoffe hergestellt. Die magnetisierbaren Partikel werden entweder kunststoffgebunden oder gesintert und heißgepresst. Insbesondere die heißkompaktierten hochperformanten Weichmagnetwerkstoffe, die sogenannten SMC auf Basis von Eisen, besitzen den Vorteil einer guten Wirbelstromunterdrückung bei geringen Verlusten sowie der Möglichkeit einer dreidimensionalen Flussführung aufgrund isotroper Eigenschaften. Dieser Vorteil wird mit dem Problem einer gegenläufigen Verschlechterung der Festigkeitseigenschaften erkauft. Diese weichmagnetischen Werkstoffe zeigen daher aktuell für Anwendungen mit hoher mechanischer Belastung, z. B. bei elektrischen Antrieben, insbesondere aber bei hohen Temperaturen keine ausreichenden Festigkeiten, da die Flieh-bzw. Zentripetalkräfte sowie Vibrationen die mechanische Belastbarkeit dieser Werkstoffe überschreiten. Daher kommen für rotierende elektrische Maschinen in der Regel die beschriebenen Blechpakete aus einer Vielzahl von gewalzten Elektroblechen zum Einsatz. Die Einzelbleche erhalten durch die Umformung sowie durch nicht magnetische Additive wie Silizium oder Aluminium zwar verbesserte Festigkeitseigenschaften und Wirbelstromunterdrückungen durch einen reduzierten elektrischen Widerstand, sie stoßen aber ebenso wie aktuell bekannte Sinterwerkstoffe bei erhöhten Anforderungen an Motoren zunehmend an ihre technologischen Leistungsgrenzen, insbesondere an ihre Grenzen der mechanischen Festigkeit. Zudem ist die gute mechanische magnetische Flussführung nur in den einzelnen Blechebenen gegeben.

Die Aufgabe der Erfindung besteht darin, einen Motor bereitzustellen, der gegenüber herkömmlichen elektrischen Motoren eine verbesserte Wirbelstromunterdrückung bei geringen elektrischen Verlusten sowie die Möglichkeit einer dreidimensionalen Magnetflussführung aufweist, wobei die entsprechenden magnetischen Kerne des elektrischen Motors gegenüber herkömmlichen SMC-Werkstoffen und herkömmlichen Blechpaketen eine deutlich höhere mechanische Festigkeit aufweisen und somit höhere Rotations- bzw. Bewegungsgeschwindigkeiten des elektrischen Motors ermöglicht werden.

Die Lösung der Aufgabe besteht in einem elektrischen Motor mit den Merkmalen des Patentanspruchs 1.

Der elektrische Motor nach Patentanspruch 1 umfasst einen Stator und eine bewegte Komponente, die bei einem Linearmotor ein Läufer und bei einem Drehmotor ein Rotor ist. Ferner weist zumindest die bewegte Komponente, also in einem Spezialfall der Rotor einen weichmagnetischen Strukturwerkstoff auf Eisenbasis auf. Die Erfindung zeichnet sich dadurch aus, dass der weichmagnetische Strukturwerkstoff Kristallite, auch im Weiteren vereinfachend Partikel genannt aus einer ferromagnetischen Eisenbasislegierung aufweist, die durch Korngrenzen getrennt sind. Ferner sind diese einzelnen Partikel der ferromagnetischen Eisenbasislegierung zwischenschichtfrei, was bedeutet, dass sich die Partikel direkt berühren, ohne dass zwischen den einzelnen Partikeln beispielsweise eine Kunststoffmatrix eine Zwischenschicht bilden würde. Ferner weist der Strukturwerkstoff zur Verstärkung der mechanischen Festigkeit keramische Fasern auf, die einen Fasergehalt gerechnet in Volumenprozent zwischen 0,2 Vol.-% und 10 Vol.-% aufweisen. Das Aspektverhältnis der Fasern ist dabei in derart ausgestaltet, dass es kleiner als 0,1 ist.

Unter dem Begriff Weichmagnetische Werkstoffe werden Materialien verstanden, die sich in einem Magnetfeld leicht magnetisieren lassen. Diese magnetische Polarisation kann z. B. durch einen elektrischen Strom in einer stromdurchflossenen Spule um einen Magnetkern oder durch Anwesenheit eines Permanentmagneten erzeugt werden. Die Polarisation führt in allen weichmagnetischen Werkstoffen zu einer vielfach höheren magnetischen Flussdichte, als sie das von außen wirkende magnetische Feld in Luft erzeugt. Im Gegensatz zu hartmagnetischen Werkstoffen, dies sind beispielsweise Dauermagneten, wird bei weichmagnetischen Stoffen der Hystereseverlust beim Ummagnetisieren, z. B. in einem Transformator oder im Wechselfeld in Generatoren und Elektromotoren, klein gehalten, d.h. das Magnetfeld, bei der die Ummagnetisierung erfolgt ist gering (sog. Koerzitivfeld). Da neben dem Hystereseverlust auch der Wirbelstromverlust verringert werden soll, werden bei netztypischen Frequenzen widerstandserhöhende Legierungszusätze wie Silizium und Aluminium (bei Eisenlegierungen) verwendet und die Dicke der Bleche in einem Blechstapel (auch Blechpaket genannt) verringert.

Der Begriff Eisenbasis bedeutet dabei, dass die Partikel eine ferromagnetische Legierung umfassen, die als Legierungselement mit dem größten Anteil in Gewichtsprozent Eisen aufweist. Dabei sind weitere anorganische Zusatzstoffe, insbesondere solche, die die magnetischen Eigenschaften betreffen, nicht ausgeschlossen.

Im Gegensatz zum Stand der Technik handelt es sich hier bei dem magnetischen Kern für die bewegte Komponente um einen Strukturwerkstoff, der als solches im Gegensatz zu rein planaren Blechen dreidimensional darstellbar ist und somit die Struktur des Kernes analog wie dies im Stand der Technik eine Kernpaket tut, abbildet. Anders als die beschriebenen SMCs weist der weichmagnetische Strukturwerkstoff der in dem elektrischen Motor gemäß Patentanspruch 1 zum Einsatz kommt, auch keine Matrixmaterialien auf Kunststoffbasis auf, die die Festigkeit dieses Materials deutlich herabsetzen würde. Im Gegenzug dazu sind keramische Fasern mit einem relativ kleinen Fasergehalt von weniger als 10 aber mindestens 0,2 Vol.-% vorhanden, die die hohen mechanischen Festigkeiten bei hohen Umdrehungen bzw. hohen Geschwindigkeiten des elektrischen Motors gewährleisten.

Es hat sich dabei herausgestellt, dass insbesondere der Fasergehalt zwischen 0,2 und 5 % eine deutliche Festigkeitserhöhung mit sich bringt und gleichzeitig auch eine erhebliche Reduktion der Leitfähigkeit bezogen auf die Leitfähigkeit der reinen Eisenpartikel erfolgt, was wiederum die Wirbelstromverluste des weichmagnetischen Strukturwerkstoffes verringert. Diese Verringerung der Leitfähigkeit erfolgt in dem genannten Wertebereich deutlich stärker, als dies eine mathematische Abschätzung beispielsweise durch eine Bruggemann Korrelation erwarten ließe.

Dabei hat sich herausgestellt, dass der Bereich, den der Fasergehalt an Volumenprozent umfasst, auch noch kleiner als 5 % sein kann, und zwar zwischen 0,2 und 4 Vol.-%, ganz besonders bevorzugt zwischen 2 Vol.-% und 5 Vol.-% beträgt. Dies ist der Bereich, in dem die Festigkeit durch die Zugabe von keramischen Fasern stark zunimmt und eine möglichst starke Reduktion der Leitfähigkeit bezogen auf das reine Eisen erfolgt um, wie bereits erwähnt, die Wirbelstromverluste zu minimieren und die Festigkeit im gleichen Maße zu erhöhen. Die Form der keramischen Fasern ergeben sich durch ihr Aspektverhältnis, das kleiner als 0,1 ist. Das bedeutet, dass die Länge der Fasern mindestens zehnmal so groß ist wie ihr mittlerer Durchmesser. Dieses Aspektverhältnis schließt sowohl Kurzfaser als auch mittlere oder Langfasern bzw. Endlosfasern ein. Kurzfasern haben gegenüber den Langfasern den Vorteil, dass sie günstiger herzustellen und einfacher in den Strukturwerkstoff einzubringen sind. Langfasern hingegen weisen in der Regel insbesondere bei dreidimensionalen Ausgestaltungen mit komplexen Topologien eine höhere Festigkeit auf. In den meisten Fällen hat es sich herausgestellt, dass die Zugabe von Kurzfasern in der Größenordnung von 100 µm, bevorzugt zwischen 70 pm und 150 pm sowie ein Durchmesser von etwa 6 µm, bevorzugt zwischen 4 pm und 10 pm bzw. zwischen 5 pm und 7 pm bereits eine sehr hohe Steigerung der Festigkeit des weichmagnetischen Strukturwerkstoffes gegenüber unverstärkten Sinterwerkstoffen bietet. Ferner hat es sich als zweckmäßig herausgestellt, dass die keramischen Fasern besonders bevorzugt als Aluminiumoxidfaser ausgestaltet sind, da diese eine hohe Festigkeit bei geringen Kosten aufweisen. Siliziumcarbidfasern und Titanboridfasern sind ebenfalls zweckmäßig.

Der Durchmesser der einzelnen Partikel auf Eisenbasis bzw. der Kristallite in einem (Matrix-) Gefüge ist bevorzugt größer als 10 pm. Es hat sich herausgestellt, dass Partikel mit mehr als 10 pm Durchmesser im Ausgangszustand besonders gute weichmagnetische Eigenschaften aufweisen und sich sehr schnell umpolarisieren lassen (geringe Koerzitivfeldstärke), sodass auch hohe Rotationen bis zu 30.000/Min. also im Kilohertzbereich bei der Rotation eines Motors so darstellbar sind. Dabei wird unter dem Partikeldurchmesser der maximale Partikeldurchmesser verstanden, sodass die Partikel durch einen quadratischen Sieböffnungsausschnitt mit einer Kantenlänge von 10 pm nicht durchführbar sind, von so einem Sieb also zurückgehalten werden.

In einer bevorzugten Ausgestaltungsform der Erfindung wird der weichmagnetische Strukturwerkstoff durch ein Heißpressverfahren hergestellt (z. B. heißisostatisches Pressen). Durch diese Herstellungsmethode kann im Wesentlichen endfornah (Near Net Shape) der Strukturwerkstoff dargestellt werden und muss nur mit geringem Aufwand mechanisch nachbearbeitet werden. Alternativ ist es auch zweckmäßig, den Strukturwerkstoff kaltisostatisch zu pressen und einem anschließenden Sinterverfahren zu unterziehen. Auch eine Verarbeitung als hochgefüllte Paste bzw. Compound mit anschließender Entbinderung (Entfernung aller organischer Bestandteile) und anschließender Sinterung (mit oder ohne Druck) ist möglich. Diese Herstellungsverfahren charakterisieren den Werkstoff in seinen Grundzügen, und stehen den üblichen Blechpaketen in rotierenden elektrischen Maschinen entgegen, die, wie bereits erwähnt, durch Ausstanzen oder Lasern von planaren gewalzten Blechen und deren Zusammenfügung zu einem dreidimensionalen Körper entstehen. Die entsprechenden weichmagnetischen Werkstoffe gemäß des Patentanspruchs 1 können dabei durch die beschriebenen isostatischen Formgebungsverfahren dargestellt werden.

Weitere Ausgestaltungsformen der Erfindung und weitere Merkmale werden anhand der folgenden Figuren näher erläutert. Dabei handelt es sich um rein schematische und exemplarische Darstellungen, die keine Einschränkung des Schutzbereichs darstellen. Dabei zeigen:
- Figur 1:: eine dreidimensionale Explosionsdarstellung eines typischen Elektromotors mit Rotor, Stator und Gehäuse,
- Figur 2:: ein Blechpaket für einen elektrischen Motor nach dem Stand der Technik,
- Figur 3:: einen weichmagnetischen Strukturwerkstoff, auf Eisenbasislegierung mit keramischen Fasern verstärkt,
- Figur 4;: einen Zusammenhang zwischen dem Fasergehalt des Strukturwerkstoffes und dessen Leitfähigkeit und
- Figur 5:: eine schematische Darstellung der Mikrostruktur des weichmagnetischen Strukturwerkstoffes.

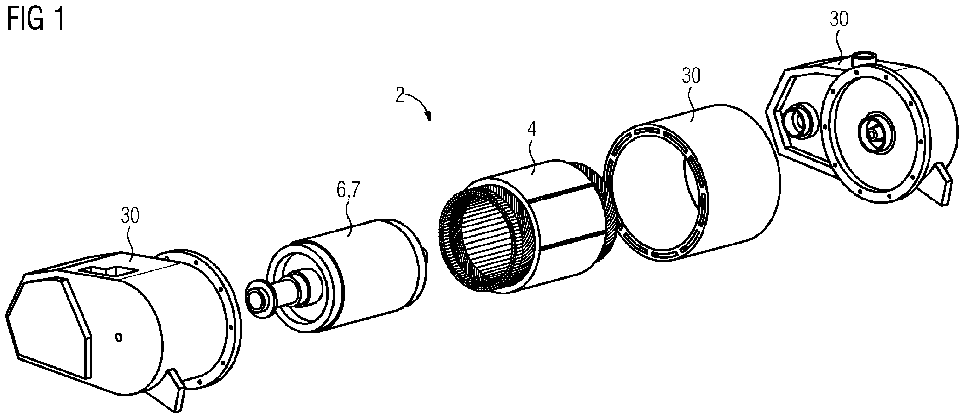

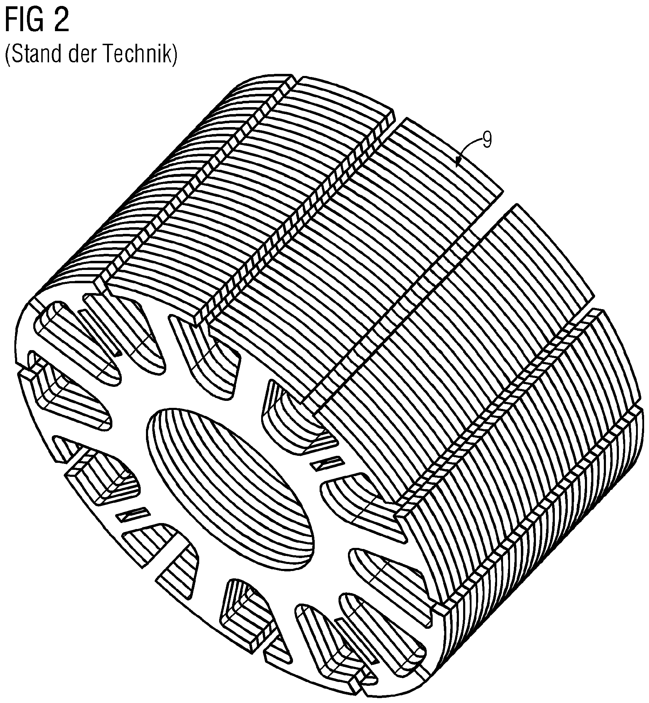

In Figur 1 ist der Übersichtlichkeit halber eine Explosionsdarstellung eines Elektromotors 2, hier in Ausgestaltung eines rotierenden Motors, dargestellt. Dieser weist drei Gehäuseteile 30 auf, die der eigentliche Motor, umfassend einen Stator 4 sowie eine bewegte Komponente 6, hier ausgestaltet in Form eines Rotors 7 angeordnet sind. Grundsätzlich kann das im Weiteren Beschriebene auch auf einen Linearmotor anerkannt werden, wobei gemäß der Figuren 1, 2 und 3 exemplarisch die Erläuterung eines rotierenden Motors gewählt ist.

Der Rotor 7 weist dabei bei Motoren gemäß dem Stand der Technik ein sogenanntes Blechpaket 9 auf, das einen magnetischen Kern für die benötigte Spulenwicklung bildet. Dieses Blechpaket ist aus einzelnen Blechen zusammengesetzt und bildet somit einen Strukturkörper. Die einzelnen Bleche werden vor dem Zusammensetzen und Verkleben ausgestanzt oder durch ein Lasertrennverfahren in ihre charakteristische Strukturierung gebracht, die im Dreidimensionalen beispielsweise Nuten darstellen. Hierbei handelt es sich um ein übliches Verfahren nach dem Stand der Technik, das jedoch den Nachteil aufweist, dass die Blechpakete 9, ähnlich wie Pulververbundwerkstoffe, mit einer nicht ausreichenden Festigkeit belegt sind, wenn hohe Fliehkräfte oder hohe Geschwindigkeiten und Beschleunigungen auf diese wirken.

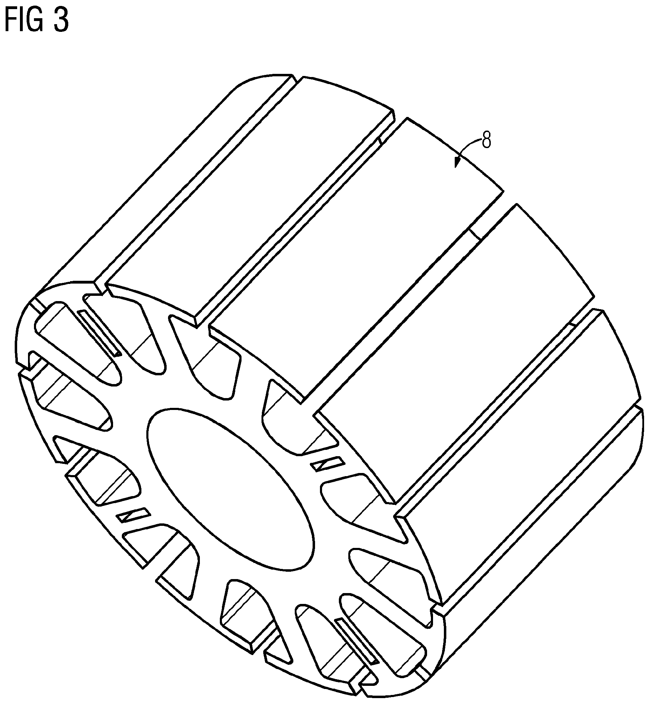

In Figur 3 ist hingegen ein von der Topografie baugleicher magnetischer Kern in Form eines weichmagnetischen Strukturwerkstoffes 8 dargestellt, der die gleiche Funktionalität im Einsatz im elektrischen Motor 2 erfüllt, wie das Blechpaket 9, der jedoch werkstofftechnisch vollkommen unterschiedlich ausgestaltet ist. Der weichmagnetische Strukturwerkstoff 8 gemäß Figur 3 unterscheidet sich nicht nur von dem Blechpaket 9, sondern auch von herkömmlichen SMC-Werkstoffen, die in Kunststoffmatrix eingebettete Eisenpartikel umfassen.

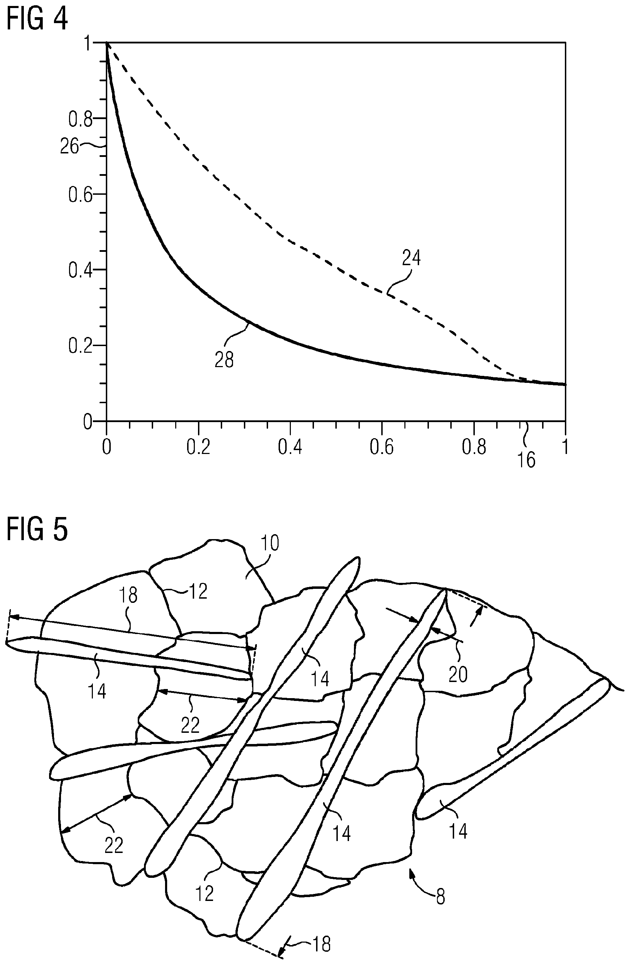

Die Neuartigkeit des Strukturwerkstoffes 8 aus Figur 3 ergibt sich zunächst aus einer Erkenntnis, die gemäß Figur 4 hergeleitet werden kann. Dabei geht man zunächst auf die magnetischen bzw. elektrischen Verluste ein, die durch den Eisenkern eines Rotors bzw. des Motors insgesamt hervorgerufen werden. Diese Verluste werden auch als Eisenverluste bezeichnet. Die Eisenverluste insgesamt können durch komplexe mathematische Zusammenhänge beschrieben werden. Vereinfacht ausgedrückt, setzen sie sich additiv zusammen aus sogenannten Hystereseverluste, Wirbelstromverlusten und zusätzlichen Verlusten, die in der Regel auf das Zusammenspiel von Wirbelstrom und Domänenwandbewegungen der einzelnen magnetischen Domänen zurückzuführen sind. Hierbei gibt es bei den Größen, die die einzelnen Verluste bestimmen, gegenläufige Effekte bzw. auch daraus resultierende Zielkonflikte. Um die Wirbelstromverluste, die einen sehr hohen Anteil der Eisenverluste darstellen, möglichst gering zu halten, ist es jedoch wichtig, die elektrische Leitfähigkeit der Partikel möglichst gering zu halten.

Es hat sich gemäß Figur 4 herausgestellt, dass ein relativ geringer Volumenanteil an keramischen Fasern (aufgetragen an der x-Achse ist der Volumenanteil zwischen 0 und 1, zur Umrechnung auf Volumen % müssen die angegebenen Zahlenwerte mit 100 multipliziert werden), der bereits bei ca. 0,2 Vol.-% wirksam wird und bei ca. 10 % an Faseranteil in eine lineare Sättigung übergeht, eine sehr starke Absenkung der Leitfähigkeit 26 hervorruft. Die Leitfähigkeit 26, die in Figur 4 an der Y-Achse aufgetragen ist, wird dabei als Normierung der elektrischen Leitfähigkeit des faserverstärkten Materials auf die elektrische Leitfähigkeit von Eisen aufgetragen. Durch mathematische Modellierung, wie sie beispielsweise durch die Bruggemann Gleichung 24, die gestrichelt in der Figur 4, eingezeichnet ist, nahegelegt wird, wäre diese starke Absenkung der elektrischen Leitfähigkeit durch einen relativ geringen Faseranteil nicht zu erwarten gewesen. Im Gegenzug bewirkt allerdings schon ein sehr geringer Anteil an Faserverstärkung eine deutliche Erhöhung der Zugfestigkeit, was dazu führt, dass die Faserverstärkung sowohl die mechanischen als auch die elektrischen Eigenschaften des Strukturwerkstoffes 8 erheblich positiv beeinflussen.

Der weichmagnetische Strukturwerkstoff 8 gemäß Figur 3 unterscheidet sich in seinem Aufbau von herkömmlichen magnetischen Werkstoffen neben darin, dass er zum einen aus Eisenpartikeln aufgebaut ist, wobei es sich hier um Eisenbasislegierungen handelt, in der Eisen den größten Einzelanteil, bevorzugt mehr als 50 % des Gewichtsanteils ausmacht. Diese Partikel 10 sind, wie erwähnt, durch keramische Fasern 14, hier als Aluminiumoxidfasern ausgestaltet, verstärkt. Die Mikrostruktur dieses Strukturwerkstoffes 8 ist in Figur 5 schematisch dargestellt, worauf noch im Weiteren eingegangen werden wird. Im Gegensatz zu SMC-Werkstoffen sind zwischen den Partikeln 10 Korngrenzen 12 angeordnet, die zwischenschichtfrei sind, was bedeutet, dass keine zusätzliche Matrix, insbesondere keine Kunststoffmatrix vorzusehen ist, in die die Partikel 10 eingelagert wären. Die Partikel 10 berühren sich somit an ihren Korngrenzen auf elementarer Legierungsebene, wobei selbstverständlich hier Agglomerate von verschiedenen Elementen vorherrschen können und es auch zu Ausscheidungen an den Korngrenzen 12 kommen kann.

Wie bereits erwähnt und wie aus der Figur 4 zu entnehmen, liegt der Fasergehalt bevorzugt zwischen 0,2 und 10 Vol.-%. Ein besonders starkes Abknicken der Leitfähigkeit und eine noch sehr gute Zunahme der Festigkeit des Werkstoffes 8 ist zwischen einem Fasergehalt von 0,2 und 5 Vol.-% zu beobachten, weshalb in diesem Bereich die bevorzugte Faserzugabe erfolgt. Ferner sind die keramischen Fasern 14 in einer vorteilhaften Ausgestaltungsform als Kurzfasern ausgestaltet, die bevorzugt eine Länge zwischen 70 und 300 µm aufweisen. Besonders gute Eigenschaften haben Kurzfasern aus Aluminiumoxid mit einer Länge von 100 pm gezeigt. Dabei weisen diese Fasern 14 einen Faserdurchmesser 20 von ungefähr 6 pm auf, wobei der bevorzugte Faserdurchmesser zwischen 5 und 10 pm liegt. In Figur 5 ist exemplarisch dargestellt, wie die Fasern 14 in die Kornstruktur der Partikel 10 eingelagert sind. Dabei verlaufen die Fasern 14 bevorzugt entlang von Korngrenzen 12, wo es zu Phaseneffekten zwischen den einzelnen Materialien, also der Eisenbasislegierung und in diesem Fall Aluminiumoxidfasern kommt. Durch die Formgebungsverfahren, wie dem heißisostatischen Pressen kommt es bevorzugt zu Sintereffekten zwischen den Partikeln 10 an den Korngrenzen 12, wobei ein monolithischer Übergang zwischen der Material der Faser 14 (beispielsweise) Aluminiumoxid 14 und der Eisenbasislegierung der Partikel 10 nicht wünschenswert ist. Dies ist deshalb nicht wünschenswert, da durch eine derartige Materialtrennung im Festkörper ein sogenannter Pull-Out-Effekt bei makroskopischen mechanischen Belastungen des Strukturwerkstoffes 8 auftritt, wobei an der Grenzfläche zwischen der Faser 14 und dem Partikel 16 durch mikroskopische Bewegungen Energie absorbiert wird, was makroskopisch festigkeitserhöhend wirkt und die Ausbreitung von unterkritischem Risswachstums, das zu einem katastrophalen Bruch führen könnte, unterbindet.

### Bezugszeichenliste

- 2: elektrischer Motor
- 4: Stator
- 6: bewegte Komponente
- 7: Rotor
- 8: weichmagnetischer Strukturwerkstoff
- 9: Blechpaket nach Stand der Technik
- 10: Partikel
- 12: Korngrenzen
- 14: keramische Faser
- 16: Fasergehalt
- 18: Faserlänge
- 20: Faserdurchmesser
- 22: Partikeldurchmesser
- 24: Bruggemann Näherung
- 26: Leitfähigkeit normiert auf Eisen
- 28: normierte Leitfähigkeit als Funktion des Fasergehaltes
- 30: Gehäuse

## Patentansprüche

1. Elektrischer Motor mit einem Stator (4) und einer bewegten Komponente (6), wobei die bewegte Komponente (6) einen weichmagnetischen Strukturwerkstoff (8) auf Eisenbasis umfasst, wobei der weichmagnetische Strukturwerkstoff (8)
- Kristallite (10) aus einer ferromagnetischen Eisenbasislegierung aufweist, die durch Korngrenzen (12) getrennt sind,
- wobei eine zwischenschichtfreie Berührung der Kristallite (10) an Korngrenzen (12) vorliegt und
- der Strukturwerkstoff (8) keramische Fasern (14) enthält,
- wobei der Fasergehalt (16) zwischen 0,2 Vol.-% und 0,5 Vol.-% beträgt, und
- das Aspektverhältnis der Fasern (14) kleiner als 0,1 ist.

2. Elektrischer Motor nach Anspruch 1, **dadurch gekennzeichnet, dass** die keramischen Fasern (14) Aluminiumoxidfasern sind.

3. Elektrischer Motor nach einem der vorhergehenden Ansprüche, **dadurch gekennzeichnet, dass** die keramischen Fasern (14) eine Länge (18) zwischen 70 pm und 300 pm aufweisen.

4. Elektrischer Motor nach Anspruch 3, **dadurch gekennzeichnet, dass** die keramischen Fasern (14) eine Länge (18) zwischen 70 pm und 150 pm aufweisen.

5. Elektrischer Motor nach einem der vorhergehenden Ansprüche, **dadurch gekennzeichnet, dass** die keramischen Fasern (14) einen Durchmesser (20) zwischen 4 µm und 10 µm aufweisen.

6. Elektrischer Motor nach Anspruch 5, **dadurch gekennzeichnet, dass** die keramischen Fasern (14) einen Durchmesser (20) zwischen 5 pm und 7 pm aufweisen.

7. Elektrischer Motor nach einem der vorhergehenden Ansprüche, **dadurch gekennzeichnet, dass** 80 % der Kristallite (10) einen Partikeldurchmesser (22) aufweisen, der größer als 10 pm ist.

8. Elektrischer Motor nach einem der vorhergehenden Ansprüche, **dadurch gekennzeichnet, dass** die bewegte Komponente (6) ein Rotor (7) ist.

9. Elektrischer Motor nach einem der vorhergehenden Ansprüche, **dadurch gekennzeichnet, dass** der weichmagnetische Strukturwerkstoff (8) durch ein heißisostatisches Pressverfahren hergestellt ist.

10. Elektrischer Motor nach einem der Ansprüche 1 bis 8, **dadurch gekennzeichnet, dass** der weichmagnetische Strukturwerkstoff (8) durch ein kaltisostatisches Pressverfahren und anschließender Sinterung hergestellt ist.

11. Elektrischer Motor nach einem der Ansprüche 1 bis 8, **dadurch gekennzeichnet, dass** der weichmagnetische Strukturwerkstoff (8) durch ein pastenbasiertes Verfahren insbesondere Metal-Injection Moulding (MIM) oder ein Dickschicht-Druckverfahren mit anschließender Entbinderung und Sinterung hergestellt ist.

## Claims

1. Electric motor having a stator (4) and a moving component (6), wherein the moving component (6) comprises an iron-based soft-magnetic structural material (8), wherein the soft-magnetic structural material (8)
- includes crystallites (10) of a ferromagnetic iron-based alloy separated by grain boundaries (12),
- wherein there is interlayer-free contact between the crystallites (10) at grain boundaries (12) and
- the structural material (8) contains ceramic fibers (14),
- wherein the fiber content (16) is between 0.2% by volume and 0.5% by volume, and
- the aspect ratio of the fibers (14) is less than 0.1.

2. Electric motor according to Claim 1, **characterized in that** the ceramic fibers (14) are alumina fibers.

3. Electric motor according to any of the preceding claims, **characterized in that** the ceramic fibers (14) have a length (18) between 70 µm and 300 pm.

4. Electric motor according to Claim 3, **characterized in that** the ceramic fibers (14) have a length (18) between 70 µm and 150 µm.

5. Electric motor according to any of the preceding claims, **characterized in that** the ceramic fibers (14) have a diameter (20) between 4 µm and 10 pm.

6. Electric motor according to Claim 5, **characterized in that** the ceramic fibers (14) have a diameter (20) between 5 µm and 7 µm.

7. Electric motor according to any of the preceding claims, **characterized in that** 80% of the crystallites (10) have a particle diameter (22) greater than 10 µm.

8. Electric motor according to any of the preceding claims, **characterized in that** the moving component (6) is a rotor (7) .

9. Electric motor according to any of the preceding claims, **characterized in that** the soft-magnetic structural material (8) has been produced by a hot isostatic pressing method.

10. Electric motor according to any of Claims 1 to 8, **characterized in that** the soft-magnetic structural material (8) has been produced by a cold isostatic pressing method, followed by sintering.

11. Electric motor according to any of Claims 1 to 8, **characterized in that** the soft-magnetic structural material (8) has been produced by a paste-based method, especially metal injection molding (MIM) or a thick-film printing method with subsequent debindering and sintering.

## Revendications

1. Moteur électrique comprenant un stator (4) et un élément (6) en mouvement, dans lequel l'élément (6) en mouvement comprend un matériau (8) de structure à magnétisme doux à base de fer, dans lequel le matériau (8) de structure à magnétisme doux
- a des cristallites (10) en un alliage ferromagnétique à base de fer, qui sont séparés par des joints (12) de grain,
- dans lequel il y a un contact sans couche intermédiaire des cristallites (10) aux joints (12) de grain et
- le matériau (8) de structure contient des fibres (14) en céramique,
- dans lequel la teneur (16) en fibres est comprise entre 0,2 % en volume et 0,5% en volume, et
- le rapport d'aspect des fibres (14) est plus petit que 0,1.

2. Moteur électrique suivant la revendication 1, **caractérisé en ce que** les fibres (14) en céramique sont des fibres en oxyde d'aluminium.

3. Moteur électrique suivant l'une des revendications précédentes, **caractérisé en ce que** les fibres (14) en céramique ont une longueur (18) comprise entre 70 µm et 300 µm.

4. Moteur électrique suivant la revendication 3, **caractérisé en ce que** les fibres (14) en céramique ont une longueur (18) comprise entre 70 µm et 150 pm.

5. Moteur électrique suivant l'une des revendications précédentes, **caractérisé en ce que** les fibres (14) en céramique ont un diamètre (20) compris entre 4 µm et 10 µm.

6. Moteur électrique suivant la revendication 5, **caractérisé en ce que** les fibres (14) en céramique ont un diamètre (20) compris entre 5 pm et 7 pm.

7. Moteur électrique suivant l'une des revendications précédentes, **caractérisé en ce que** 80 % des cristallites (10) ont un diamètre (22) de particules, qui est plus grand que 10 pm.

8. Moteur électrique suivant l'une des revendications précédentes, **caractérisé en ce que** l'élément (6) en mouvement est un rotor (7).

9. Moteur électrique suivant l'une des revendications précédentes, **caractérisé en ce que** le matériau (8) de structure à magnétisme doux est fabriqué par un procédé à la presse isostatique à chaud.

10. Moteur électrique suivant l'une des revendications 1 à 8, **caractérisé en ce que** le matériau (8) de structure à magnétisme doux est fabriqué par un procédé à la presse isostatique à froid suivi d'un frittage.

11. Moteur électrique suivant l'une des revendications 1 à 8, **caractérisé en ce que** le matériau (8) de structure à magnétisme doux est fabriqué par un procédé à base de pâte, en particulier par métal-injection moulding (MIM) ou par un procédé d'impression en couche épaisse suivi d'un déliantage et d'un frittage.
